# FASCICULE DE BREVET EUROPEEN

(11) **EP 0 501 845 B1**
(45) Date de publication et mention de la délivrance du brevet: **14.12.1994**
(21) Numéro de dépôt: 92400327.0
(22) Date de dépôt: 07.02.1992
(51) Int. Cl.: F16H 63/30, F16H 63/20

(54) **Dispositif de commande d'une boîte de vitesses**
Betätigungseinrichtung eines Getriebes
Control device for a gearbox

(30) Priorité: 25.02.1991 FR 9102224
(43) Date de publication de la demande: 02.09.1992
(73) Titulaire: AUTOMOBILES PEUGEOT, 75116 Paris (FR); AUTOMOBILES CITROEN, 92200 Neuilly-sur-Seine (FR)
(72) Inventeur: Chretien, Philippe, F-78430 Louveciennes (FR)
(74) Mandataire: Obolensky, Michel

(56) Documents cités:
- EP-A- 0 300 843
- GB-A- 2 174 465
- US-A- 4 510 818

## Description

La présente invention concerne un dispositif de commande d'une boîte de vitesses de véhicule automobile.

Certaines conceptions de boîtes de vitesses compactes ne permettent pas de loger un synchroniseur du pignon de marche arrière. Il demeure toutefois nécessaire de prévoir un agencement permettant d'éviter le phénomène de craquement lors de l'engagement de la marche arrière à l'arrêt du véhicule.

Dans ces circonstances, toutes les pièces liées en rotation à l'arbre secondaire de la boîte de vitesses sont immobiles et il est alors nécessaire de ralentir celles qui sont liées à l'arbre primaire pour éviter le phénomène de craquement.

Dans la mesure où les différents pignons correspondant aux rapports de marche avant sont équipés de synchroniseurs, la solution la plus logique pour la conception d'un tel agencement consiste à actionner préalablement à l'engagement du rapport de marche arrière un des synchroniseurs de marche avant, et de préférence le synchroniseur associé au rapport de rang le plus élevé qui a une inertie plus faible.

Selon la conception la plus courante et la plus simple pour la grille de commande d'une boîte à cinq rapports de marche avant et un rapport de marche arrière, dite à trois lignes, dans laquelle la cinquième vitesse et la marche arrière sont disposées aux extrémités opposées d'une même ligne, il faut garantir que, lors de l'engagement de la marche arrière, le synchroniseur de cinquième vitesse soit dans un premier temps actionné pour ralentir l'arbre primaire puis dégagé. En effet, le ralentissement de l'arbre primaire doit être libéré avant la mise en contact des dentures pour permettre une mise en coincidence des dents afin de ne pas gêner la phase finale d'engagement.

Il est souhaitable d'utiliser le mouvement de passage de la marche arrière, et non pas le mouvement de sélection qui pénaliserait le passage de quatrième en cinquième vitesses dans une grille à trois lignes, pour provoquer l'engagement du cône de friction du synchroniseur associé au rapport opposé à la marche arrière, puis le dégager avant la venue en contact des dentures.

Parmi les solutions de l'état de la technique, le document FR-A-2.263.428 décrit un agencement de conception simple résultant du fait que le rapport supérieur de quatrième vitesse est agencé à côté du rapport de marche arrière, et non pas en face, la marche arrière étant elle-même commandée par un axe parallèle à l'axe de commande troisième-quatrième. La solution décrite dans ce document ne permet donc pas de résoudre le problème mentionné précédemment.

Dans le document US-A-4.785.681, il est utilisé deux cames qui coopèrent entre elles, l'une d'entre elles pivotant à la manière d'un cliquet, et qui sont agencées entre le basculeur de marche arrière et la fourchette de commande du cinquième rapport de marche avant.

Cet agencement présente de nombreux inconvénients dûs notamment au fait qu'il est nécessaire de prévoir un prolongement du basculeur pour recevoir l'une des cames qui est particulièrement encombrant. Il est par ailleurs particulièrement difficile d'assurer un positionnement précis des deux cames l'une par rapport à l'autre.

De plus le dégagement du cône de friction du synchroniseur de la cinquième vitesse, avant l'engagement des dentures de marche arrière, n'est pas garanti positivement d'où un risque de frottement de ce cône lors de l'utilisation de la marche arrière et donc d'une usure rapide du synchroniseur de cinquième vitesse.

L'invention a pour but de proposer un dispositif de commande d'une boîte de vitesses de véhicule automobile qui permet de résoudre le problème mentionné précédemment tout en évitant les inconvénients inhérents au dispositif connu de l'état de la technique.

Dans ce but l'invention propose un dispositif de commande d'une boîte de vitesses de véhicule automobile du type comportant un organe de commande mobile en translation axiale et en rotation autour de son axe perpendiculaire aux arbres primaire et secondaire de la boîte de vitesses pour, à partir d'une position axiale déterminée de sélection, provoquer par rotation dans un premier sens l'engagement sans synchroniseur du rapport de marche arrière par coopération de l'extrémité du doigt de commande de marche arrière avec une crosse de marche arrière formée à l'extrémité d'un basculeur qui pivote autour d'un axe fixe perpendiculaire aux arbres primaire et secondaire, et du type comportant des moyens pour freiner les pignons de la boîte de vitesses préalablement à l'engagement du rapport de marche arrière par coopération des organes d'engagement de ce rapport avec des éléments d'actionnement d'un synchroniseur associé à l'un des rapports de marche avant de la boîte de vitesses, caractérisé en ce que lesdits éléments d'actionnement comportent une fourchette de commande du synchroniseur liée en translation axiale à un axe de commande parallèle aux arbres primaire et secondaire et un bras d'entraînement de l'axe de commande de fourchette lié en translation à ce dernier et dont une extrémité coopère par des moyens escamotables avec une surface d'entraînement formée sur le basculeur de marche arrière, et en ce que le dispositif comporte un second doigt lié en translation et en rotation avec le doigt de commande de marche arrière et dont l'extrémité est susceptible de coopérer avec une butée associée audit bras d'entraînement, l'engagement de la marche arrière par pivotement du basculeur provoquant, lors de la phase initiale, l'actionnement du synchroniseur par lesdits éléments d'actionnement dont l'axe de commande est alors déplacé en translation axiale selon un premier sens jusqu'à ce que l'extrémité du second doigt vienne coopérer avec ladite butée, puis provoquant, lors de la phase suivante, le dégagement du synchroniseur par déplacement en translation axiale selon son second sens dudit axe de commande du fait de l'escamotage desdits moyens escamotables qui résulte de la coopération du second doigt avec ladite butée.

Selon d'autres caractéristiques de l'invention :
- la surface d'entraînement est une rampe formée sur le basculeur et les moyens escamotables comportent une bille sollicitée élastiquement pour coopérer avec la rampe ;
- le second doigt est un doigt de commande du rapport susdit de marche avant dont l'extrémité, lorsque l'organe de commande est dans sa position axiale de sélection de la marche arrière, est reçue avec jeu entre les deux faces latérales opposées d'une crosse formée sur le bras d'entraînement, l'une de ces faces latérales opposées constituant la butée ;
- la hauteur de cette face de butée est déterminée de manière que le second doigt de commande puisse pivoter librement au-delà d'une position angulaire déterminée correspondant à la phase d'engagement de la marche arrière consécutive au dégagement du synchroniseur ;
- l'axe de pivotement du basculeur est perpendiculaire à l'axe de l'organe de commande ; et
- l'extrémité du doigt de commande de marche arrière est reçue dans une crosse formée au voisinage d'une extrémité du basculeur, l'axe de pivotement de ce dernier étant disposé entre cette crosse et la surface d'entraînement.

D'autres caractéristiques et avantages de l'invention apparaîtront à la lecture de la description détaillée qui va suivre pour la compréhension de laquelle on se reportera aux dessins annexés dans lesquels :
- La figure 1 est une vue en coupe partielle, selon la ligne 1-1 de la figure 2, du dispositif de commande d'une boîte de vitesses réalisée conformément aux enseignements de l'invention ; et
- la figure 2 est une vue de détail du dispositif de la figure 1 illustré en coupe selon la ligne 2-2 de cette figure ;
- la figure 3 est une vue simplifiée de dessus du bras d'entraînement, du basculeur de marche arrière et du synchroniseur du cinquième rapport de marche avant ;
- la figure 4 est une vue de détail illustrant une variante de réalisation de la figure 2 ; et
- les figures 5 à 12 permettent d'illustrer le mode de fonctionnement du dispositif de commande réalisé conformément aux enseignements de l'invention dans ses différentes positions fonctionnelles.

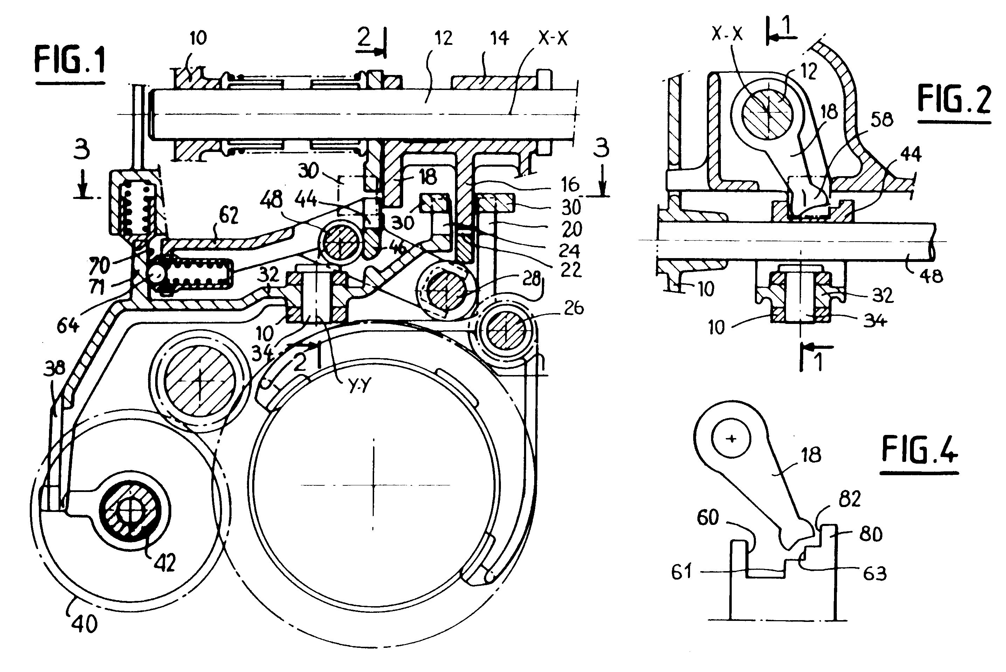

On reconnaît à la figure 1 une partie d'une boîte de vitesses dans le carter 10 de laquelle est monté coulissant un organe de commande 12 qui est monté mobile en translation parallèlement à son axe X-X ainsi qu'en rotation autour de ce même axe.

L'organe de commande 10 reçoit une pièce de commande 14 qui lui est liée en translation et en rotation.

La pièce de commande 14 comporte deux doigts de commande 16 et 18.

Le doigt de commande 16, en fonction de la position axiale occupée par l'organe de commande 12, est susceptible d'être reçu dans une crosse 20 de commande des premier et deuxième rapports de marche avant, dans une crosse 22 de commande des troisième et quatrième rapports de marche avant, c'est-à-dire dans la position dans laquelle il est illustré à la figure 1, ou enfin dans une crosse 24 de commande de la marche arrière.

Les crosses 20 et 22 sont respectivement associées aux axes coulissants 26 et 28 qui portent les fourchettes de commande des rapports de marche avant correspondants. Les axes 26 et 28 sont perpendiculaires à l'axe X-X.

On reconnaît également sur la figure 1 les pavés 30 d'une ancre de verrouillage d'une conception classique.

La crosse de marche arrière 24 est formée à une extrémité libre d'un basculeur 32 de commande de la marche arrière qui est monté pivotant au moyen d'un axe 34 autour d'un axe géométrique Y-Y qui est perpendiculaire à l'axe X-X ainsi qu'aux axes des arbres primaire 36 et secondaire de la boîte de vitesses.

L'extrémité du basculeur 32 opposée à la crosse 24 comporte une fourchette 38 qui agit directement sur le baladeur 40 de marche arrière monté sur son axe 42.

Lorsque le doigt de commande 16 est engagé dans la crosse 24, le second doigt de commande 18 se trouve engagé dans une crosse 44 de commande du cinquième rapport de marche avant.

La crosse 44 est formée sur une pièce 46 également appelée noix de cinquième qui est liée en translation et en rotation à un axe 48 monté coulissant dans le carter 10 et qui porte, à son extrémité libre 50 la fourchette 52 qui agit sur le manchon 53 du synchroniseur 54 du pignon 56 du cinquième rapport de marche avant.

L'axe 48 est parallèle aux arbres primaire et secondaire et est perpendiculaire à l'organe de commande 12 et à l'axe Y-Y de pivotement du basculeur 32.

L'extrémité libre 58 du doigt de commande 18 est reçue entre les faces latérales opposées de la crosse 44. Une première face latérale 60 est une surface plane continue tandis que la face latérale opposée est une surface comportant deux portions parallèles 61 et 63 dont la première s'étend sur une hauteur réduite par rapport à celle de la face latérale 60 puis se prolonge, de manière décalée par la portion 63.

La noix 46 comporte un prolongement 62 qui constitue le bras d'entraînement de l'axe 48 au moyen du basculeur 32.

A cet effet le bras 62 reçoit à son extrémité une bille escamotable 64 qui est montée coulissante dans un trou cylindrique 66 et est sollicitée élastiquement par un ressort 68 en direction d'une rampe 70 formée en vis-à-vis sur un prolongement 71 du basculeur 32.

Le bras d'entraînement 62 s'étend à l'opposé de la crosse 24 par rapport à l'axe 48. Les différents composants du dispositif de commande illustré aux figures 1 à 3 y sont représentés dans la position dite de point mort.

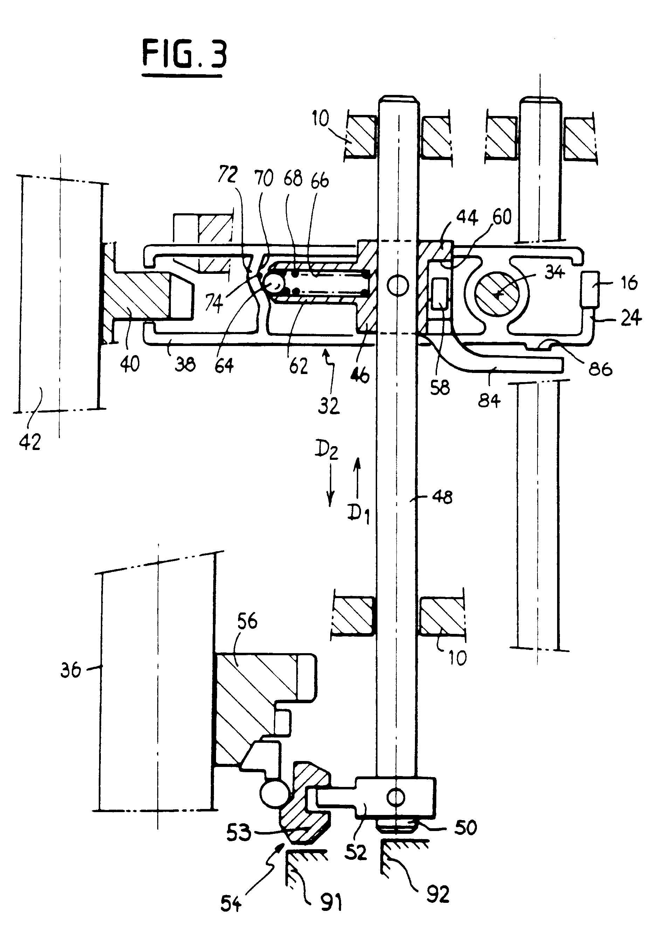

Sur la figure 3, qui est une vue en coupe partielle selon la ligne 3-3 de la figure 1, la fourchette 52 n'exerce aucun effort axial sur le manchon 53 du synchroniseur 54 et la bille 64 est en face d'une première portion inclinée 72 de la rampe 70.

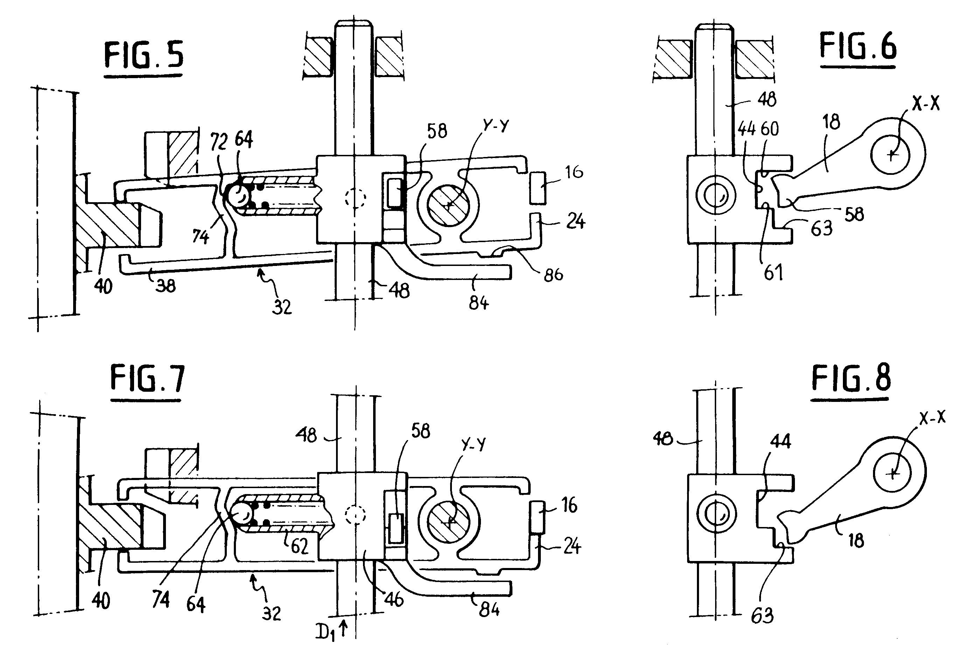

Dans la position de point mort (Fig. 5 et 6), l'extrémité 58 du doigt de commande 18 est reçue librement dans la crosse 44 et ne coopère avec aucune des faces latérales opposées de cette dernière.

La fourchette 38 du basculeur 32 chevauche librement le baladeur 40. Il subsiste un jeu entre la bille 64 et la portion inclinée 74 de la rampe 70. La fourchette 52 de commande du manchon 53 du synchroniseur 54 n'est donc pas sollicitée axialement et le synchroniseur n'assure aucune fonction de synchronisation.

La première phase d'engagement du rapport de marche marche arrière est illustrée aux figures 7 et 8. A cet effet, le conducteur transmet un mouvement de passage au moyen de l'organe de commande 12 qui provoque la rotation simultanée des deux doigts de commande 16 et 18 dans le sens anti-horaire en considérant les figures 2 et 8.

Cette rotation a premièrement pour effet d'amener l'extrémité du doigt de commande 16 en appui contre la face en vis-à-vis de la crosse 24 du basculeur de marche arrière 32 pour provoquer un pivotement de ce dernier autour de son axe Y-Y dans le sens horaire en considérant la figure 7.

Le pivotement du basculeur 32 provoque la venue en contact de la bille 64 avec la portion inclinée 74 de la rampe 70 et donc l'entraînement de la noix 46 par le bras d'entraînement 62 dans la direction D1 indiquée aux figures 3 et 7.

Cet entraînement est transmis par l'axe 48 à la fourchette 52 et donc au manchon 53 du synchroniseur 54. Cette action a pour effet d'amener le cône de friction du synchroniseur en contact et donc de provoquer un freinage ou ralentissement de l'arbre primaire de la boîte de vitesses.

Le déplacement du bras d'entraînement 62 et de l'axe 48 selon la direction D1 s'interrompt dès que l'extrémité libre 58 du doigt de commande 18 vient en butée contre la portion supérieure 63 de la face en vis-à-vis de la crosse 44.

Le contact de l'extrémité 58 avec la portion de face latérale 63 impose ensuite à l'ensemble constitué par la noix 46, le bras d'entraînement 62, l'axe coulissant 48 et la fourchette 52 un déplacement selon la direction D2 indiquée aux figures 3, 9 et 10.

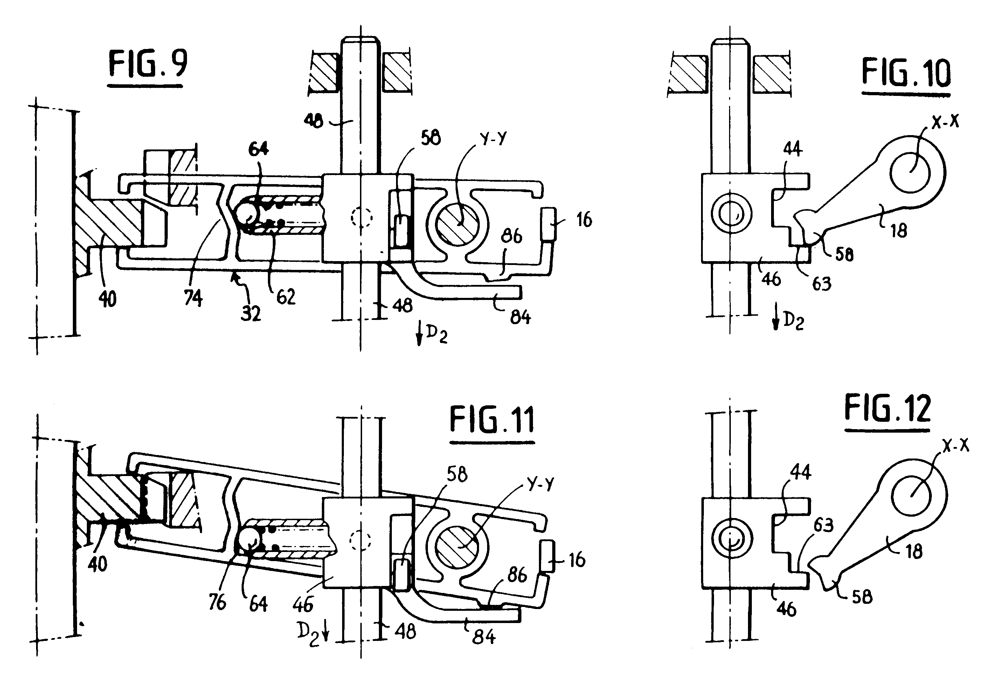

Le déplacement selon la direction D2 tend donc à dégager le cône de friction du synchroniseur 54 et impose à la bille 64 de s'escamoter dans le bras d'entraînement 62 du fait de l'action sur la bille 64 de la portion inclinée 74 de la rampe 70. Dans la position illustrée aux figures 9 et 10 dans laquelle l'effort de ralentissement imposé par le synchroniseur 54 est maximal, le contact de l'extrémité 58 avec la face 63 impose un effort de franchissement de la bille 64 avec la portion de rampe 74 analogue à un effort d'engagement de synchroniseur et permet donc au conducteur de ressentir un point d'arrêt ou point dur dans la course du levier de manoeuvre du changement de vitesses.

Sous l'action en rotation de l'organe de commande 12 qui se poursuit dans le sens anti-horaire (Fig. 10), le basculeur 32 continue à pivoter autour de son axe fixe Y-Y dans le sens horaire (Fig. 9) pour aboutir à la position illustrée aux figures 11 et 12.

Au cours de cette phase finale d'engagement du rapport de marche arrière, l'extrémité 58 du doigt de commande 18 est libre de pivoter dans le sens anti-horaire en considérant la figure 12 car la portion de face latérale 63 est d'une hauteur réduite de manière à permettre ce pivotement ultérieur.

L'axe 48 et la fourchette 50 n'exercent plus aucun effort sur le manchon 53 du synchroniseur 54. Le dégagement préalable de ce dernier est assuré positivement du fait de la présence d'une autre portion inclinée 76 de la rampe 70 qui coopère avec la bille 64 pour confirmer le déplacement de la noix 46 et de l'axe 48 selon la direction D2.

En position de marche arrière passée, il peut être souhaitable d'assurer un maintien positif du synchroniseur 54 de cinquième rapport de marche avant pour éviter qu'un accident qui surviendrait en marche arrière ne provoque un blocage de la boîte de vitesses par engagement du cinquième rapport de marche avant.

A cet effet il est par exemple possible de prévoir, comme cela est illustré sur la variante de réalisation de la figure 4, un talon supplémentaire 80 dont la face latérale 82 est décalée latéralement par rapport à la portion de face latérale 63 et s'étend au-dessus de cette dernière.

Une autre solution consiste à utiliser un prolongement 84 formé sur la noix 46 pour coopèrer avec une butée en vis-à-vis 86 formée directement sur le basculeur 32. Grâce à cet agencement on réalise directement l'interverrouillage entre le basculeur 32 et la noix 46.

Lors du dégagement de la marche arrière par rotation du basculeur 32 dans le sens anti-horaire (Fig. 3) une butée fixe 90 ou 91 prévue au niveau du synchroniseur 54 procure un effet de réaction axiale à l'axe 48 pour permettre le franchissement de la portion 76 de la rampe 40 par la bille 64.

## Revendications

1. Dispositif de commande d'une boîte de vitesses de véhicule automobile du type comportant un organe de commande (12) mobile en translation axiale et en rotation autour de son axe (X-X) perpendiculaire aux arbres primaire et secondaire de la boîte de vitesses pour, à partir d'une position axiale déterminée de sélection, provoquer par rotation dans un premier sens l'engagement sans synchroniseur du rapport de marche arrière par coopération de l'extrémité du doigt de commande de marche arrière (16) avec une crosse de marche arrière (24) formée à l'extrémité d'un basculeur (32) qui pivote autour d'un axe fixe (Y-Y) perpendiculaire aux arbres primaire et secondaire, et du type comportant des moyens pour freiner les pignons de la boîte de vitesses préalablement à l'engagement du rapport de marche arrière par coopération des organes d'engagement de ce rapport avec des éléments d'actionnement d'un synchroniseur associé à l'un des rapports de marche avant de la boîte de vitesses, caractérisé en ce que lesdits éléments d'actionnement, comprenant une fourchette (52) de commande du synchroniseur (54) liée en translation axiale à un axe de commande (48) parallèle aux arbres primaire et secondaire, comportent un bras d'entraînement (62) de l'axe (48) de commande de fourchette (52) lié en translation à ce dernier et dont une extrémité coopère par des moyens escamotables (64) avec une surface d'entraînement (70) formée sur le basculeur de marche arrière (32), et en ce que le dispositif comporte un second doigt (18) lié en translation et en rotation avec le doigt de commande de marche arrière (16) et dont l'extrémité (58) est susceptible de coopérer avec une butée (63) associée audit bras d'entraînement (62), l'engagement de la marche arrière par pivotement du basculeur (32) provoquant, lors de la phase initiale, l'actionnement du synchroniseur (54) par lesdits éléments d'actionnement (62, 64) dont l'axe de commande (48) est alors déplacé en translation axiale selon un premier sens (D1) jusqu'à ce que l'extrémité (58) du second doigt vienne coopérer avec ladite butée (63), puis provoquant, lors de la phase suivante, le dégagement du synchroniseur par déplacement en translation axiale selon son second sens (D2) dudit axe de commande (48) du fait de l'escamotage desdits moyens escamotables qui résulte de la coopération du second doigt (18) avec ladite butée (63).

2. Dispositif de commande selon la revendication 1, caractérisé en ce que ladite surface d'entraînement est une rampe (70) formée sur le basculeur (32) et en ce que lesdits moyens escamotables comportent une bille (64) escamotée élastiquement pour coopérer avec ladite rampe (70).

3. Dispositif de commande selon l'une des revendications 1 ou 2, caractérisé en ce que ledit second doigt de commande (18) est un doigt de commande du rapport susdit de marche avant dont l'extrémité (58), lorsque l'organe de commande (12) est dans sa position axiale de sélection de la marche arrière, est reçue avec jeu entre les deux faces latérales opposées (60, 61, 63) d'une crosse (44) formée sur le bras d'entraînement (46, 62) l'une desdites faces latérales opposées (64) constituant ladite butée.

4. Dispositif de commande selon la revendication 3, caractérisé en ce que la hauteur de ladite face de butée (63) est déterminée de manière que ledit second doigt de butée (18) peut pivoter librement au-delà d'une position angulaire déterminée correspondant à la phase d'engagement de la marche arrière consécutive au dégagement du synchroniseur (54).

5. Dispositif de commande selon l'une quelconque des revendications précédentes, caractérisé en ce que l'axe (Y-Y) de pivotement du basculeur est perpendiculaire à l'axe (X-X) de l'organe de commande.

6. Dispositif de commande selon l'une quelconque des revendications précédentes, caractérisé en ce que l'extrémité du doigt (16) de commande de marche arrière est reçue dans une crosse (24) formée au voisinage d'une extrémité du basculeur (32) et en ce que l'axe de pivotement (34) du basculeur est disposé entre cette crosse et la surface d'entraînement (70).

## Claims

1. Means for control of a motor vehicle gearbox of the type comprising a control member (12) which is capable of axial translational movement and rotation about its axis (X-X) perpendicular to the input and output shafts of the gearbox in order, as a result of rotation in a first direction from a given axial selection position, to engage the reverse ratio without a synchroniser through cooperation between the end of the reverse control finger (16) a reverse crosshead (24) formed at the end of a rocker (32) which pivots around a fixed axis (Y-Y) perpendicular to the input and output shafts, and of the type comprising means for slowing the pinions in the gearbox prior to engaging the reverse ratio through cooperation between the engaging members of this ratio and members activating a synchroniser associated with one of the forward ratios of the gearbox, characterised in that the said activating means comprising a fork (52) controlling the synchroniser (54) connected by axial translation to a control shaft (48) parallel to the input and output shafts comprises an arm (62) which draws the axis (48) of the fork control (52) linked translationally thereto, of which one end acts through retractable means (64) together with a drive surface (70) formed on the reverse rocker (32), and in that the device comprises a second finger (18) linked translationally and rotationally with the reverse control finger (16) and of which the end (58) is capable of acting together with a stop (63) associated with the said drive arm (62), engagement of reverse by pivoting the rocker (32) causing, in a first stage, the synchroniser (54) to be activated by the said activating members (62, 64) whose control axis (48) is then displaced in axial translation in a first direction (D1) until the end (58) of the second finger acts together with the said stop (63), and then in the next stage causing the synchroniser to become disengaged by axial translational movement in the second direction (D2) of the said control shaft (48) as a result of the retraction of the said retractable means which results in the second finger (18) acting together with the said stop (63).

2. Control means according to claim 1, characterised in that the said drive surface is a ramp (70) formed on the rocker (32) and in that the said retractable means incorporates a ball (64) which is elastically retracted to act together with the said ramp (70).

3. Control means according to either of claims 1 or 2, characterised in that the second control finger (18) is a finger controlling the abovementioned forward ratio whose end (58) is received with play between the two opposing lateral faces (60, 61, 63) of a crosshead (44) formed on the drive arm (46, 62) when the control member (12) is in its axial position for the selection of reverse, one of the said opposing lateral faces (64) comprising the said stop.

4. Control means according to claim 3, characterised in that the height of the said stop face (63) is determined in such a way that the second stop finger (18) can pivot freely beyond a specific angular position corresponding to the stage in which reverse is engaged following disengagement of the synchroniser (54).

5. Control means according to any of the foregoing claims, characterised in that the axis (Y-Y) about which the rocker pivots is perpendicular to the axis (X-X) of the control member.

6. Control means according to any one of the foregoing claims, characterised in that the end of the reverse control finger (16) is received into a crosshead (24) formed in the vicinity of one end of the rocker (32) and in that the pivot axis (34) of the rocker is located between this crosshead and the drive surface (70).

## Patentansprüche

1. Vorrichtung zur Betätigung eines Kraftfahrzeuggetriebes, umfassend ein Betätigungsorgan (12), das in axialer Translation und in Drehung um seine zur Primärwelle und zur Sekundärwelle des Getriebes senkrechte Achse (X-X) beweglich ist, um, ausgehend von einer bestimmten axialen Wahlstellung, durch Drehung in einer ersten Richtung das Einrücken des Rückwärtsgangverhältnisses ohne Synchronisiervorrichtung durch Zusammenwirken des Endes des Rückwärtsgangbetätigungsfingers (16) mit einem Rückwärtsgangbügel (24), der am Ende eines Kipporgans (32) gebildet ist, das um eine feststehende, zur Primärwelle und zur Sekundärwelle senkrechte Achse (Y-Y) verschwenkt, und umfassend Mittel zum Bremsen der Zahnräder des Getriebes vor dem Einrücken des Rückwärtsgangverhältnisses durch Zusammenwirken der Organe zum Einrücken dieses Verhältnisses mit Betätigungselementen einer Synchronisiervorrichtung, die einem der Vorwärtsgangverhältnisse des Getriebes zugeordnet ist, dadurch gekennzeichnet, daß diese Betätigungselemente, die eine in axialer Translation mit einer zur Primärwelle und zur Sekundärwelle parallelen Betätigungsachse (48) verbundene Gabel (52) zur Betätigung der Synchronisiervorrichtung (54) umfassen, einen Arm (62) zur Mitnahme der Achse (48) zur Betätigung der Gabel (52) besitzen, der mit dieser Achse in Translation verbunden ist und von dem ein Ende durch wegrückbare Mittel (64) mit einer Mitnahmefläche (70) zusammenwirkt, die auf dem Rückwärtsgangkipporgan (32) gebildet ist, und daß die Vorrichtung einen zweiten Finger (18) besitzt, der in Translation und Drehung mit dem Rückwärtsgangbetätigungsfinger (16) verbunden ist und dessen Ende (58) mit einem diesem Mitnahmearm (62) zugeordneten Anschlag (63) zusammenwirken kann, wobei die Einschaltung des Rückwärtsgangs durch Verschwenken des Kipporgans (32) in der Anfangsphase die Betätigung der Synchronisiervorrichtung (54) durch diese Betätigungselemente (62, 64) bewirkt, deren Betätigungsachse (48) hierbei in axialer Translation in einer ersten Richtung (D1) bewegt ist, bis das Ende (58) des zweiten Fingers zum Zusammenwirken mit diesem Anschlag (63) kommt, und dann in der folgenden Phase die Ausrückung der Synchronisiervorrichtung durch Bewegung dieser Betätigungsachse (48) in axialer Translation in einer zweiten Richtung (D2) infolge des Wegrückens dieser wegrückbaren Mittel bewirkt, das sich aus dem Zusammenwirken des zweiten Fingers (18) mit diesem Anschlag (63) ergibt.

2. Betätigungsvorrichtung nach Anspruch 1, dadurch gekennzeichnet, daß diese Mitnahmefläche eine auf dem Kipporgan (32) gebildete Rampe (70) ist und daß diese wegrückbaren Mittel eine Kugel (64) umfassen, die elastisch weggerückt ist, um mit dieser Rampe (70) zusammenzuwirken.

3. Betätigungsvorrichtung nach einem der Ansprüche 1 oder 2, dadurch gekennzeichnet, daß dieser zweite Betätigungsfinger (18) ein Betätigungsfinger dieses Vorwärtsgangverhältnisses ist, dessen Ende (58), wenn das Betätigungsorgan (12) in seiner axialen Stellung der Wahl des Rückwärtsgangs ist, mit einem Spiel zwischen den beiden entgegengesetzten Seitenflächen (60, 61, 63) eines Bügels (44) aufgenommen ist, der auf dem Mitnahmearm (46, 62) gebildet ist, wobei eine dieser entgegengesetzten Seitenflächen (64) diesen Anschlag bildet.

4. Betätigungsvorrichtung nach Anspruch 3, dadurch gekennzeichnet, daß die Höhe dieser Anschlagsfläche (63) so bestimmt ist, daß dieser zweite Anschlagsfinger (18) frei über eine bestimmte Winkelstellung hinaus verschwenken kann, die der auf die Ausrückung der Synchronisiervorrichtung (54) folgenden Phase der Einrückung des Rückwärtsgangs entspricht.

5. Betätigungsvorrichtung nach einem der vorhergehenden Ansprüche, dadurch gekennzeichnet, daß die Schwenkachse (Y-Y) des Kipporgans zur Achse (X-X) des Betätigungsorgans senkrecht ist.

6. Betätigungsvorrichtung nach einem der vorhergehenden Ansprüche, dadurch gekennzeichnet, daß das Ende des Rückwärtsgangbetätigungsfingers (16) in einem Bügel (24) aufgenommen ist, der in Nähe eines Endes des Kipporgans (32) gebildet ist, und daß die Schwenkachse (34) des Kipporgans zwischen diesem Bügel und der Mitnahmefläche (70) angeordnet ist.
